# EUROPÄISCHE PATENTSCHRIFT

(11) **EP 1 304 453 B1**
(45) Veröffentlichungstag und Bekanntmachung des Hinweises auf die Patenterteilung: **23.03.2005**
(21) Anmeldenummer: 02021425.0
(22) Anmeldetag: 25.09.2002
(51) Int. Cl.: F01M 13/04

(54) **Ölnebelagglomerationsvorrichtung**
Oil mist agglomerating device
Dispositif de conglomeration pour brouillard d'huile

(30) Priorität: 13.10.2001 DE 10150713
(43) Veröffentlichungstag der Anmeldung: 23.04.2003
(73) Patentinhaber: ROBERT BOSCH GMBH, 70442 Stuttgart (DE)
(72) Erfinder: Endig, Thomas, 73432 Aalen (DE); Stegmaier, Juergen, 73525 Schwaebisch Gmuend (DE); Hezel, Bruno, 70565 Stuttgart (DE)

(56) Entgegenhaltungen:
- EP-A- 0 933 508
- DE-A- 10 053 147
- DE-U- 1 950 028
- FR-A- 1 268 093
- US-A- 5 429 101

## Beschreibung

### Stand der Technik

Die Erfindung geht aus von einer Agglomerationsvorrichtung gemäß dem Oberbegriff von Anspruch 1.

Bei Brennkraftmaschinen wird der Überdruck in einem Kurbelgehäuse durch eine Kurbelgehäuseentlüftung ausgeglichen, wobei das hierbei abgesaugte Gas hohe Konzentrationen an Kohlenwasserstoffen enthalten und deshalb nicht einfach an die umgebende Atmosphäre abgegeben werden kann. Vielmehr wird dieses sog. Blowby-Gas in den Ansaugtrakt der Brennkraftmaschine zurückgeleitet, um es dem Brennraum zuzuführen. Neben Kohlenwasserstoffen enthält das Blowby-Gas auch einen Ölnebel mit Öltropfen unterschiedlicher Tröpfchengröße, insbesondere auch relativ kleine Öltröpfchen. Letztere können jedoch zu Fehlmessungen führen, wenn das Blowby-Gas durch einen im Ansauftrakt befindlichen Heißfilm-Luftmassenmesser (HFM) geführt wird, während größere, im Blow-by-Gas mitgeführte Öltröpfchen für einen solchen Luftmassenmesser relativ unschädlich sind.

Falls die Ölanteile aus dem in den Ansaugtrakt rückgeführten Gasstrom entfernt werden sollen, sind darüber hinaus größere Öltröpfchen über Trägheitsabscheider wie beispielsweise Zyklone leichter abzuscheiden als kleinere.

Aus der DE 37 01 587 C1 ist eine Agglomerationsvorrichtung bekannt, mit welcher aus kleineren, in einem Gasstrom geführten Flüssigkeitströpfchen größere Flüssigkeitströpfchen durch gegenseitige Anlagerung geformt werden, insbesondere mit welcher kleinere, in einem mittels einer Kurbelgehäuseentlüftung einer Brennkraftmaschine frei werdenden Kurbelgehäusegasstrom geführte Öltröpfchen zu größeren Öltröpfchen geformt werden, beinhaltend wenigstens ein von dem Gasstrom zumindest teilweise durchströmtes Agglomerationselement.

Das Agglomerationselement besteht aus einem hülsenförmigen Metallgestrick mit vertikaler Achse, welches in einem Gehäuse aufgenommen ist. Die Zuströmöffnung für das Blow-by-Gas befindet sich am Gehäuseboden und die Abströmung erfolgt an einer oberen Stirnfläche des Metallgestricks, so dass dieses bezogen auf die vertikale Höhenlage von unten nach oben durchströmt wird. Nachteilig bei dieser Anordnung ist jedoch, dass das Öl aufgrund der gegen die Strömungsrichtung des Gases wirkenden Schwerkraft die Tendenz hat, sich als Film im Agglomerationselement anzulagern und dieses mit der Zeit zuzusetzen, so dass nach einiger Zeit ein wartungsaufwendiger Austausch notwendig wird.

Bekannt ist aus der DE 100 53 147 A1 eine Agglomerationsvorrichtung mit einer Trenneinheit, die in einem Führungskanal ein erstes Flüssigkeitstrennelement aufweist und diese umgebend ein zweites ringförmiges, wobei beide Flüssigkeitstrennelemente in Achsrichtung von einer Stirnseite zur anderen durchströmt werden.

Ein hülsenförmiges Agglomerationselement, welches mit einer Mantelwand des umgebenden Gehäuses einen Ringraum bildet, der mit einer bodenseitigen Zuströmöffnung in Verbindung steht, zeigt die US 5 429 101.

### Vorteile der Erfindung

Weil demgegenüber die Zuströmung des Blowby-Gases zum erfindungsgemäßen Agglomerationselement auf einem höheren Niveau stattfindet als die Abströmung, wird diese im Wesentlichen von oben nach unten durchströmt. Hierbei unterstützt die in Strömungsrichtung wirkende Schwerkraft die auf das flüssigkeitshaltige Gas einwirkenden Strömungskräfte, so dass die zwischen der Flüssigkeit und dem Agglomerationselement vorhandenen Adhäsionskräfte leichter überwunden werden können. Folglich wird die gewünschte Ausbildung von Flüssigkeitströpfchen sowie deren Abtropfen vom Agglomerationselement gefördert. Hierdurch wird die Selbstreinigung der erfindungsgemäßen Agglomerationsvorrichtung nachhaltig unterstützt, wodurch sich eine hohe Lebensdauer und eine weitgehende Wartungsfreiheit ergibt.

Gemäß einer besonders zu bevorzugenden Ausführungsform ist das Agglomerationselement in einem Gehäuse aufgenommen, welches eine obere Zuströmöffnung sowie eine auf einem niedrigeren Niveau angeordnete, untere Abströmöffnung aufweist. Die Zuströmöffnung und die Abströmöffnung sind als zueinander koaxiale Öffnungen in einer Kopfwandung bzw. in einer Bodenwandung des Gehäuses ausgebildet, wobei das Agglomerationselement der Zuströmöffnung und der Abströmöffnung zwischengeordnet ist. Hierdurch ist eine äußerst kostengünstige und kompakte Bauweise der erfindungsgemäßen Agglomerationsvorrichtung realisierbar.

Gemäß einer bevorzugten Weiterbildung ist das Agglomerationselement als zylindrische, mit ihren Enden im Gehäuse koaxial aufgenommene Agglomerationshülse ausgebildet, wobei zwischen der radial äußeren Umfangsfläche der Hülse und einer radial inneren Umfangsfläche einer Mantelwand des Gehäuses ein äußerer Ringraum ausgebildet ist, welcher mit der Zuströmöffnung in Verbindung steht. Darüber hinaus steht zumindest ein Teil des von der Agglomerationshülse umschlossenen Innenraumes des Gehäuses mit der Abströmöffnung in Verbindung. Die vorgenannte Anordnung bewirkt, dass die Agglomerationshülse von außen nach innen und aufgrund der Wirkung der Schwerkraft zugleich von oben nach unten durchströmt wird. Folglich stellt sich eine schräg nach unten gerichtete Gasströmung ein, welche im wesentlichen die gesamte Mantelfläche der Agglomerationshülse erfasst, wodurch sich eine vorteilhaft große Wirkfläche für den Agglomerationsprozess ergibt.

Eine weitere Maßnahme sieht vor, dass die Agglomerationshülse oder das Gehäuse mit einem Abtropfkegel versehen ist, dessen Kegelspitze koaxial oberhalb der Abströmöffnung angeordnet und zu dieser hin gerichtet ist. Aufgrund dieser Geometrie werden haben die im oberen Bereich der Agglomerationshülse vorhandenen Flüssigkeitströpfchen die Tendenz, von außen entlang der Kegelflächen nach innen zur Kegelspitze zu laufen, um von dort direkt in die Abströmöffnung zu tropfen, was zu einer Verbesserung des Wirkungsgrades der erfindungsgemäßen Agglomerationsvorrichtung beiträgt.

Um die Bauteilvielfalt und damit die Fertigungskosten zu reduzieren, sind die Agglomerationshülse und der Abtropfkegel vorzugsweise als einstückiges Bauteil ausgeführt. Weiterhin weist der Abtropfkegel auf seiner von der Kegelspitze weg weisenden Seite eine Zentrierbohrung für einen Zentrierzapfen des Gehäuses auf, wodurch er mehrere Funktionen vorteilhaft in sich vereinigt.

Wie bereits eingangs erwähnt, sind größere Flüssigkeitströpfchen über Trägheitsabscheider leichter abzuscheiden als kleinere, falls die Flüssigkeitsanteile aus dem Gasstrom vollständig entfernt werden sollen. Insofern eignet sich die erfindungsgemäße Agglomerationsvorrichtung in besonderem Maße zum Einsatz in Flüssigkeitsabscheidern, insbesondere in Ölnebelabscheidern einer Kurbelgehäuseentlüftung von Brennkraftmaschinen, wenn sie einem Trägheitsabscheider wie beispielsweise einem Zyklon vorgeordnet wird.

### Zeichnungen

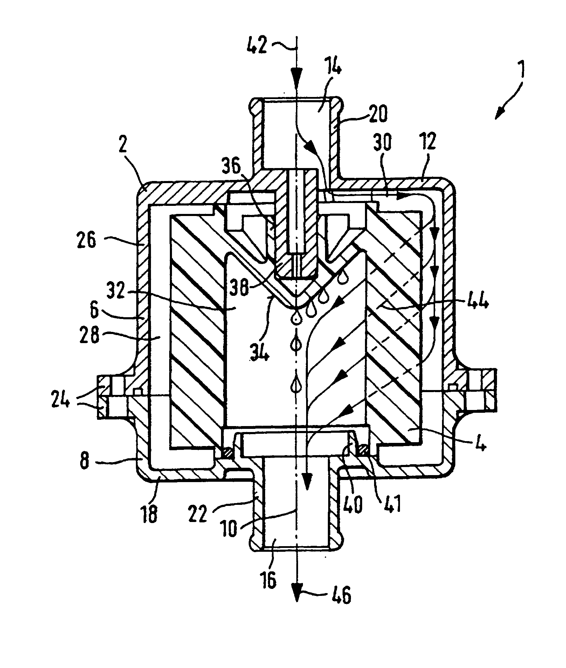

Ein Ausführungsbeispiel der Erfindung ist in der Zeichnung dargestellt und in der nachfolgenden Beschreibung näher erläutert. Die einzige Figur zeigt eine Querschnittsdarstellung durch eine bevorzugte Ausführungsform einer erfindungsgemäßen Agglomerationsvorrichtung.

### Beschreibung des Ausführungsbeispiels

In der Figur ist eine erfindungsgemäße Agglomerationsvorrichtung 1 in einer schematischen Schnittansicht dargestellt, wie sie zur Bildung von größeren Flüssigkeitströpfchen aus kleineren, in einem Gasstrom geführten Flüssigkeitströpfchen, insbesondere zur Bildung von größeren Öltröpfchen aus kleineren, in einem mittels einer Kurbelgehäuseentlüftung aus einem Kurbelgehäuse einer Brennkraftmaschine frei werdenden Gasstrom geführten Öltröpfchen Verwendung findet. Dabei ist die Agglomerationsvorrichtung 1 in Gebrauchslage dargestellt, d.h. daß in der Figur unten dargestellte Bauelemente auch unten eingebaut sind.

Die Agglomerationsvorrichtung 1 beinhaltet im wesentlichen ein Gehäuse 2 und ein Agglomerationselement 4, das in dem Gehäuse 2 aufgenommen ist. Das Gehäuse 2 ist beispielsweise zweischalig ausgeführt, bestehend aus einer Oberschale 6 und einer Unterschale 8, darüber hinaus ist das Gehäuse 2 vorzugsweise zylindrisch ausgeführt, wobei eine Gehäusemittelachse 10 in vertikaler Richtung verläuft. In einer Kopfwandung 12 der Gehäuseoberschale 6 ist eine mit der Gehäusemittelachse 10 koaxiale, obere Zuströmöffnung 14 ausgebildet, während die Unterschale 8 eine ebenfalls mit der Gehäusemittelachse 10 koaxiale Abströmöffnung 16 in einer Bodenwandung 18 aufweist. Die obere Zuströmöffnung 14 ist bezogen auf die vertikale Höhenlage auf einem höheren Niveau angeordnet als die untere Abströmöffnung 16. Darüber hinaus sind die Zuströmöffnung 14 und die Abströmöffnung 16 an jeweils einem vom Gehäuse 2 wegragenden Stutzen 20, 22 ausgebildet, an welchem jeweils ein zu einem vor- oder nachgeordneten Aggregat führender Schlauch befestigbar ist. Die Oberschale 6 und die Unterschale 8 bestehen beispielsweise aus einem thermoplastischen Kunststoff und sind über angeformte Flansche 24 miteinander flüssigkeits- und gasdicht verschraubt oder materialschlüssig verbunden.

Das Agglomerationselement ist vorzugsweise als zylindrische, mit ihren stirnseitigen Enden im Gehäuse 2 koaxial aufgenommene Agglomerationshülse 4 ausgebildet und der Zuströmöffnung 14 und der Abströmöffnung 16 strömungsmäßig zwischengeordnet.

Der Stutzen 20 der Zuströmöffnung 14 steht mit einem Aggregat, beispielsweise mit der Kurbelgehäuseentlüftung einer Brennkraftmaschine in Verbindung, über welches der Agglomerationsvorrichtung 1 ein Gasstrom mit darin verteilten Flüssigkeitströpfchen, insbesondere Öltröpfchen zugeführt wird. Das Agglomerationselement 4 ist ausgebildet, um die im Gasstrom vorhandenen Flüssigkeitströpfchen zu agglomerieren und einen Gasstrom mit demgegenüber größeren Flüssigkeitströpfchen abzugeben. Hierzu ist die Agglomerationshülse 4 vorzugsweise als Garnwickel ausgebildet, welcher aus einem Trägerkörper, der beispielsweise aus Kunststoff gefertigt ist, und einem auf den Trägerkörper gewickelten Polyestergarn besteht. Alternativ kann die Agglomerationshülse 4 auch ein Vlies, ein gepreßtes Drahtgestrick, oder jedes andere denkbare Agglomerationsmaterial beinhalten.

Zwischen der radial äußeren Umfangsfläche der Agglomerationshülse 4 und einer radial inneren Umfangsfläche einer Mantelwand 26 des Gehäuses 2 ist ein Ringraum 28 ausgebildet, welcher mit der Zuströmöffnung 14 über radiale Kanäle in Verbindung steht, von welchen ein Kanal 30 im rechten Halbschnitt der Figur zu sehen ist. Andererseits ist zumindest ein Teil des von der Agglomerationshülse 4 umschlossenen Innenraumes 32 des Gehäuses 2 mit der Abströmöffnung 16 verbunden.

Die Agglomerationshülse 4 ist weiterhin an Ihrem der Zuströmöffnung 14 zugewandten Stirnende mit einem Abtropfkegel 34 versehen, dessen Kegelspitze koaxial oberhalb der Abströmöffnung 16 angeordnet und zu dieser hingerichtet ist. Die Agglomerationshülse 4 und der Abtropfkegel 34 sind vorzugsweise als einstückiges Bauteil ausgeführt, so daß der Abtropfkegel 34 aus dem selben Kunststoffmaterial wie der Trägerkörper der Agglomerationshülse 4 besteht. Alternativ könnte der Abtropfkegel 34 auch an das Gehäuse 2, insbesondere an die Oberschale 6 angeformt oder als separates Bauteil an dieser und/oder an der Agglomerationshülse 4 befestigt sein.

Weiterhin weist der Abtropfkegel 34 auf seiner von der Kegelspitze wegweisenden Seite eine Zentrierbohrung 36 für einen mit der Gehäuse-Mittelachse 10 koaxialen Zentrierzapfen 38 der Oberschale 6 des Gehäuses 2 auf. Durch den Zentrierzapfen 38 kann die Agglomerationshülse 4 im Gehäuse 2 zentrisch aufgenommen werden. Zwischen dem zur Abströmöffnung 16 weisenden Ende der Agglomerationshülse 4 und einem den unteren Stutzen 22 ein Stück weit in den Innenraum 32 verlängernden Stutzenteil 40 ist eine Dichtung 41 eingespannt, welche den äußeren Ringraum 28 gegenüber dem Innenraum 32 flüssigkeits- und gasdicht abdichtet. Der Stutzen 22 der Abströmöffnung 16 ist vorzugsweise mit einem Trägheitsabscheider, insbesondere mit einem Zyklon verbunden, welcher in der Figur aus Maßstabsgründen nicht dargestellt ist.

Vor diesem Hintergrund ergibt sich folgende Funktionsweise der erfindungsgemäßen Agglomerationsvorrichtung 1 :

Das von der Kurbelgehäuseentlüftung der Agglomerationsvorrichtung 1 durch den Stutzen 20 der Zuströmöffnung 14 zugeführte Blowby-Gas, welches durch den Pfeil 42 veranschaulicht ist und Öltropfen unterschiedlicher Dimensionen enthält, gelangt über die Kanäle 30 zunächst in den äußeren Ringraum 28 des Gehäuses 2. Durch den Gasdruck und die insbesondere auf die Öltröpfchen wirkende Schwerkraft ergibt sich eine durch die Pfeile 44 in der Figur verdeutlichte schräge Strömung, welche einerseits von oben nach unten als auch von außen nach innen gerichtet ist und welche im wesentlichen die gesamte Längserstrekkung der Mantelfläche der Agglomerationshülse 4 erfasst. Diese Strömung ist selbstverständlich nicht auf den in der Figur von den Pfeilen 44 durchdrungenen rechten Teil der Agglomerationshülse 4 beschränkt, sondern erfasst in symmetrischer Weise auch den linken Teil.

Die Strömung bewirkt, dass sich an den als Prallelemente wirkenden Garnwickeln der Agglomerationshülse 4 insbesondere die kleineren, in dem Gasstrom mitgeführten Öltröpfchen kurzzeitig absetzen und durch gegenseitige Anlagerung größere Öltröpfchen bilden, welche einerseits durch den Staudruck der Gasströmung und andererseits durch die Wirkung der Schwerkraft wieder aus der Garnstruktur herausgelöst und durch die Abströmöffnung 16 hindurch dem nachgeordneten Trägheitsabscheider zugeführt werden.

Der an die Agglomerationshülse 4 angeformte Abtropfkegel 34 sorgt dafür, daß im oberen Bereich der Agglomerationshülse 4 vorhandene, in der Figur durch kleine Kreise veranschaulichte Öltröpfchen aufgrund der Schwerkraft und Sogwirkung der Gasströmung 44 entlang der Kegelmantelfläche nach radial innen laufen, sich an der Kegelspitze sammeln und von dort direkt in die Abströmöffnung 16 abtropfen können, von wo aus sie zusammen mit dem durch den Pfeil 46 gekennzeichneten Gasstrom die Agglomerationsvorrichtung 1 verlassen. In dem nachgeordneten Trägheitsabscheider findet anschließend die Abscheidung der mit dem Gasstrom 46 transportierten Öltröpfchen statt. Ein solcher Trägheitsabscheider, beispielsweise ein Zyklon, kann auch leicht in das Gehäuse 2 der erfindungsgemäßen Agglomerationsvorrichtung integriert werden.

Die vorliegende Agglomerationsvorrichtung 1 ist nicht auf die Agglomeration von Öltröpfchen beschränkt, vielmehr kann sie für jegliche Art von in einem Gasstrom geführten Flüssigkeiten verwendet werden. Entscheidend ist, daß der Gasstrom bezogen auf die vertikale Höhenlage dem Agglomerationselement 4 auf einem höheren Niveau zuströmt als er von ihm abströmt.

## Patentansprüche

1. Agglomerationsvorrichtung (1), mit welcher aus kleineren, in einem Gasstrom geführten Flüssigkeitströpfchen größere Flüssigkeitströpfchen durch gegenseitige Anlagerung geformt werden, insbesondere mit welcher kleinere, in einem mittels einer Kurbelgehäuseentlüftung einer Brennkraftmaschine frei werdenden Kurbelgehäusegasstrom geführte Öltröpfchen zu größeren Öltröpfchen geformt werden, beinhaltend wenigstens ein von dem Gasstrom zumindest teilweise durchströmtes Agglomerationselement (4), bei dem der Gasstrom bezogen auf die vertikale Höhenlage dem Agglomerationselement (4) auf einem höheren Niveau zuströmt als er von ihm abströmt und das Agglomerationselement (4) in einem Gehäuse (2) aufgenommen ist, welches eine obere Zuströmöffnung (14) sowie eine auf einem niedrigeren Niveau angeordnete, untere Abströmöffnung (16) aufweist und das Agglomerationselement als zylindrische, mit ihren Enden im Gehäuse (2) koaxial aufgenommene Agglomerationshülse (4) ausgebildet ist, wobei zwischen der radial äußeren Umfangsfläche der Agglomerationshülse (4) und einer radial inneren Umfangfläche einer Mantelwand (26) des Gehäuses (2) ein Ringraum (28) ausgebildet ist, welcher mit der Zuströmöffnung (14) in Verbindung steht, sowie die Zuströmöffnung (14) und die Abströmöffnung (16) als zueinander koaxiale Öffnungen in einer Kopfwandung (12) und in einer Bodenwandung (18) des Gehäuses (2) ausgebildet sind, wobei das Agglomerationselement (4) der Zuströmöffnung (14) und der Abströmöffnung (16) zwischengeordnet ist.

2. Agglomerationsvorrichtung nach Anspruch 1, **dadurch gekennzeichnet, dass** zumindest ein Teil des von der Agglomerationshülse (4) umschlossenen Innenraumes (32) des Gehäuses (2) mit der Abströmöffnung (16) in Verbindung steht.

3. Agglomerationsvorrichtung nach Anspruch 2, **dadurch gekennzeichnet, dass** die Agglomerationshülse (4) oder das Gehäuse (2) mit einem Abtropfkegel (34) versehen ist, dessen Kegelspitze koaxial oberhalb der Abströmöffnung (16) angeordnet und zu dieser hin gerichtet ist.

4. Agglomerationsvorrichtung nach Anspruch 3, **dadurch gekertnzeichnet**, dass die Agglomerationshülse (4) und der Abtropfkegel (34) als einstückiges Bauteil ausgeführt sind.

5. Agglomerationsvorrichtung nach Anspruch 3, **dadurch gekennzeichnet, dass** der Abtropfkegel (34) auf seiner von der Kegelspitze weg weisenden Seite eine Zentrierbohrung (36) für einen Zentrierzapfen (38) des Gehäuses (2) aufweist.

6. Agglomerationsvorrichtung nach Ansprüche 3, **dadurch gekennzeichnet, dass** das Gehäuse (2) aus einer die Zuströmöffnung (14) und den Abtropfkegel (34) aufweisenden Oberschale (6) und einer die Abströmöffnung (16) aufweisenden Unterschale (8) besteht.

7. Agglomerationsvorrichtung nach einem der vorhergehenden Ansprüche, **dadurch gekennzeichnet, dass** das Agglomerationselement (4) ausgebildet ist, um im Gasstrom fein verteilte Flüssigkeitstropfen zu agglomerieren und einen Gasstrom mit demgegenüber größeren Flüssigkeitströpfchen abzugeben und insbesondere einen Gamwickel, welcher aus einem Trägerkörper und einem auf den Trägerkörper gewikkelten Polyestergam besteht, ein Vlies oder ein gepresstes Drahtgestrick beinhaltet.

8. Flüssigkeitsabscheider, insbesondere Ölnebelabscheider einer Kurbelgehäuseentlüftung einer Brennkraftmaschine, beinhaltend wenigstens eine Agglomerationsvorrichtung (1) nach einem oder mehreren der vorangehenden Ansprüche.

9. Flüssigkeitsabscheider nach Anspruch 8, **dadurch gekennzeichnet, dass** der Agglomerationsvorrichtung (1) ein Trägheitsabscheider, insbesondere ein Zyklon nachgeordnet ist.

## Claims

1. Agglomeration device (1) which forms smaller liquid droplets carried in a gas stream into larger liquid droplets by bringing them together, in particular which converts smaller oil droplets, which are carried in a crankcase gas stream released by means of crankcase venting of an internal combustion engine, into larger oil droplets, which device includes at least one agglomeration element (4), which at least in part has the gas stream flowing through it and in which the gas stream flows to the agglomeration element (4) at a higher level, based on the vertical position, than it flows out of the agglomeration element, and the agglomeration element (4) is accommodated in a housing (2) which has an upper inflow opening (14) and a lower outflow opening (16) arranged at a lower level, and the agglomeration element is designed as a cylindrical agglomeration sleeve (4) accommodated with its ends coaxial in the housing (2), an annular space (28), which is in communication with the inflow opening (14), being formed between the radially outer circumferential surface of the agglomeration sleeve (4) and a radially inner circumferential surface of a lateral wall (26) of the housing (2), and the inflow opening (14) and the outflow opening (16) being formed as openings which are coaxial with respect to one another in a top wall (12) and in a base wall (18) of the housing (2), the agglomeration element (4) being arranged between the inflow opening (14) and the outflow opening (16).

2. Agglomeration device according to claim 1, **characterized in that** at least part of the interior space (32) of the housing (2) surrounded by the agglomeration sleeve (4) is in communication with the outflow opening (16).

3. Agglomeration device according to claim 2, **characterized in that** the agglomeration sleeve (4) or the housing (2) is provided with a drip-off cone (34), the tip of which cone is arranged coaxially above and directed towards the outflow opening (16).

4. Agglomeration device according to Claim 3, **characterized in that** the agglomeration sleeve (4) and the drip-off cone (34) are formed as an integral component.

5. Agglomeration device according to claim 3, **characterized in that** the drip-off cone (34) has a centring bore (36) for a centring pin (38) of the housing (2) on its opposite side from the cone tip.

6. Agglomeration device according to Claim 3, **characterized in that** the housing (2) comprises an upper shell (6), which includes the inflow opening (14) and the drip-off cone (34), and a lower shell (8), which includes the outflow opening (16).

7. Agglomeration device according to one of the preceding claims, **characterized in that** the agglomeration element (4) is designed to agglomerate liquid drops which are finely distributed in the gas stream and to release a gas stream with correspondingly larger liquid droplets, and in particular includes a yarn bobbin which comprises a support body and a polyester yarn wound onto the support body, a nonwoven or a pressed wire knit.

8. Liquid separator, in particular oil mist separator of a crankcase vent of an internal combustion engine, including at least one agglomeration device (1) according to one or more of the preceding claims.

9. Liquid separator according to claim 8, **characterized in that** an inertia separator, in particular a cyclone, is arranged downstream of the agglomeration device (1).

## Revendications

1. Dispositif d'agglomération (1), transformant des gouttelettes de liquide plus petites acheminées dans un flux de gaz, en gouttelettes de liquides plus grosses par adsorption mutuelle, en particulier dont des petites gouttelettes d'huile, dans un flux de gaz du carter de vilebrequin libéré au moyen d'un dispositif de purge du carter de vilebrequin d'un moteur à combustion interne, sont transformées en des gouttelettes d'huile plus grosses, comportant au moins un élément d'agglomération (4) au moins partiellement traversé par le flux de gaz,
dans lequel
le flux de gaz, par rapport à la situation en hauteur à la verticale, traverse l'élément d'agglomération (4) à un niveau plus haut qu'il ne sort de celui-ci, et l'élément d'agglomération (4) est logé dans un boîtier (2) qui présente une ouverture d'entrée supérieure (14) ainsi qu'une ouverture de sortie inférieure (6) à un niveau plus bas, l'élément d'agglomération (4) étant en forme de manchon d'agglomération (4) cylindrique logé de façon coaxiale avec ses extrémités dans le boîtier (2), un espace annulaire (28) étant formé entre la surface périphérique radialement extérieure du manchon d'agglomération (4) et une surface périphérique radialement intérieure d'une paroi d'enveloppe (26) du boîtier (2), est relié à l'ouverture d'entrée (14), et l'ouverture d'entrée (14) et l'ouverture de sortie (16) sont des ouvertures coaxiales l'une par rapport à l'autre dans une paroi de tête (12) et dans une paroi de fond (18) du boîtier (2), l'élément d'agglomération (4) étant disposé entre l'ouverture d'entrée (14) et l'ouverture de sortie (16).

2. Dispositif d'agglomération selon la revendication 1,
**caractérisé en ce qu'**
au moins une partie de l'espace intérieur (32) du boîtier (2) entouré par le manchon d'agglomération (4) est relié à l'ouverture de sortie (16).

3. Dispositif d'agglomération selon la revendication 2,
**caractérisé en ce que**
le manchon d'agglomération (4) ou le boîtier (2) est pourvu d'un cône d'égouttage (34), dont la pointe de cône est coaxiale au-dessus de l'ouverture de sortie (16) et est orientée vers celle-ci.

4. Dispositif d'agglomération selon la revendication 3,
**caractérisé en ce que**
le manchon d'agglomération (4) et le cône d'égouttage (34) forment un composant d'une seule pièce.

5. Dispositif d'agglomération selon la revendication 3,
**caractérisé en ce que**
le cône d'égouttage (34) présente sur son côté opposé à la pointe de cône un perçage de centrage (36) pour un tenon de centrage (38) du boîtier (2).

6. Dispositif d'agglomération selon la revendication 3,
**caractérisé en ce que**
le boîtier (2) se compose d'une coque supérieure (6) présentant l'ouverture d'entrée (14) et le cône d'égouttage (34), et d'une coque inférieure (8) présentant l'ouverture de sortie (16).

7. Dispositif d'agglomération selon l'une des revendications précédentes,
**caractérisé en ce que**
l'élément d'agglomération (4) est configuré pour agglomérer dans le flux de gaz des gouttes de liquide finement divisées et pour produire en sortie un flux de gaz contenant des gouttelettes de liquide plus grosses, et contient en particulier un enroulement de fil, qui se compose d'un corps de support et d'un fil de polyester enroulé sur le corps de support, un nontissé ou un tissé de fil comprimé.

8. Séparateur de liquide, en particulier séparateur de brouillard d'huile d'un dispositif de purge d'un carter de vilebrequin d'un moteur à combustion interne, comportant au moins un dispositif d'agglomération (1) selon une ou plusieurs des revendications précédentes.

9. Séparateur de liquide selon la revendication 8,
**caractérisé en ce qu'**
un séparateur à inertie, en particulier cyclone, est disposé en aval du dispositif d'agglomération (1).
